Europäisches Patentamt

European Patent Office

Office européen des brevets

(11) Publication number: **0 304 234 B1**

# EUROPEAN PATENT SPECIFICATION

(45) Date of publication of patent specification: **22.12.93**   (51) Int. Cl.⁵: **C03C 17/36**

(21) Application number: **88307467.6**

(22) Date of filing: **11.08.88**

(54) **Glass coated with metal oxide films having barrier properties.**

(30) Priority: **18.08.87 US 86909**
**14.01.88 US 144324**

(43) Date of publication of application:
**22.02.89 Bulletin 89/08**

(45) Publication of the grant of the patent:
**22.12.93 Bulletin 93/51**

(84) Designated Contracting States:
**BE DE ES FR GB IT LU NL SE**

(56) References cited:
**EP-A- 0 076 975**
**FR-A- 2 148 117**

(73) Proprietor: **BOC TECHNOLOGIES LIMITED**
**Chertsey Road**
**Windlesham Surrey GU20 6HJ(GB)**

(72) Inventor: **O'Shaughnessy, Roger D.**
**1025 Hesse Farm Road**
**Chaska Minnesota 55318(US)**

(74) Representative: **Bousfield, Roger James et al**
**The BOC Group plc**
**Chertsey Road**
**Windlesham Surrey GU20 6HJ (GB)**

## Description

This invention relates to metal oxide films which have barrier properties and particularly to such films as are deposited by sputtering upon coated glass substrates.

In the manufacture of glass panes for use in windows, it is common to lay down a deposit, usually by sputtering techniques, of a thin film of a metal such as silver or copper to change the reflectance and absorbance characteristics of the glass pane. Reference is made to US patent 4,462,884 (Gallery, et al.) with respect to the production of silver/copper films by cathode sputtering, and to US patent 4,166,018 (Chapin) with respect to the method of coating a substrate utilising a cathode sputtering technique involving a magnetic field to improve the sputtering efficiency.

Thin, transparent films of silver, copper and the like are susceptible to corrosion (eg. staining) when they are brought into contact, under moist or wet conditions, with various staining agents such as atmosphere-carried chlorides, sulphides, sulphur dioxide and the like. Films of this type commonly are employed on inner surfaces of multi-pane glass units so that the films are maintained in a dry conditions by desiccants or the like that remove moisture from the interpane spaces. Staining can occur, however, when coated panes of glass are stored for later fabrication into insulating glass units. To avoid staining during storage, sheets of treated paper have been employed between coated glass panes to prevent moisture and staining agents such as those described above from coming into contact with the coated metal films. Treater paper interliners of this type commonly are used but once. The paper interline cost, plus the additional labour required to insert and remove the paper liners, adds significantly to the cost of the coating and fabricating process.

To avoid the use of a treated paper interliner, it has been proposed to add to the coated panes, as an outer layer, a thick coating (100-120 Angstroms) of titanium dioxide, deposited by sputtering from a titanium metal target in the presence of oxygen. Titanium dioxide layers of at least this thickness have been found to serve as barriers, restraining corrosive or staining agents such as those described above from penetrating through them and coming into contact with the one or more metal layers therebeneath. The deposition of such thick coatings of titanium dioxide, however, has given rise to other problems. Titanium dioxide can be sputtered, as above described, only very slowly. That is, the rate of deposition is quite low. This, in turn, greatly reduces the speed at which glass panes can be provided with a series of coatings in a single coating apparatus, and consumes large quantities of electric power.

French Patent Specification No 2 148 117 discloses a glass pane having thereon a coating comprising a metal layer susceptible to staining and a separate barrier layer which is substantially amorphous and consisting in particular of titanium oxide and/or bismuth oxide.

The present invention is based upon the discovery that an easily deposited and highly effective barrier layer can be provided by a glass pane having a transparent coating thereon comprising a metal layer susceptible to staining in the presence of a staining agent, and a separate barrier layer spaced further from the surface of the glass pane than the metal layer, the barrier layer comprising a plurality of metal oxide layers including a layer of an oxide of a metal Me(1) disposed between layers of an oxide of a metal Me(2), wherein Me(1) is titanium, zirconium or hafnium or mixtures thereof and Me(2) is zinc, tin, indium or bismuth or mixtures thereof.

Generally, the barrier layer will be deposited as a single, substantially amorphous integral coating. The barrier layer will generally be substantially non-transmissive of staining agents.

The barrier layers employed in the invention desirably are a least 7 nm (70 Angstroms) in thickness and preferably are not less than about 11.5 nm (115 A) in thickness. The Me(1) oxide, preferably $TiO_2$, is present in the barrier layer in reasonably large amounts; the ratio of the "apparent" thickness of the Me(1) oxide to the total apparent thickness of the barrier layer is at least about 1/3 and preferably is not less than about 39%. The "apparent" thickness of a specific layer is that approximate thickness that would result if that layer were deposited by itself, taking into consideration the mass of material deposited and its approximate density.

In comparison to the prior art method described above in which a thick protective layer of titanium dioxide is deposited by sputtering to form a protective coating, the method of the present invention utilising the same sputtering apparatus is substantially faster and requires less electric energy.

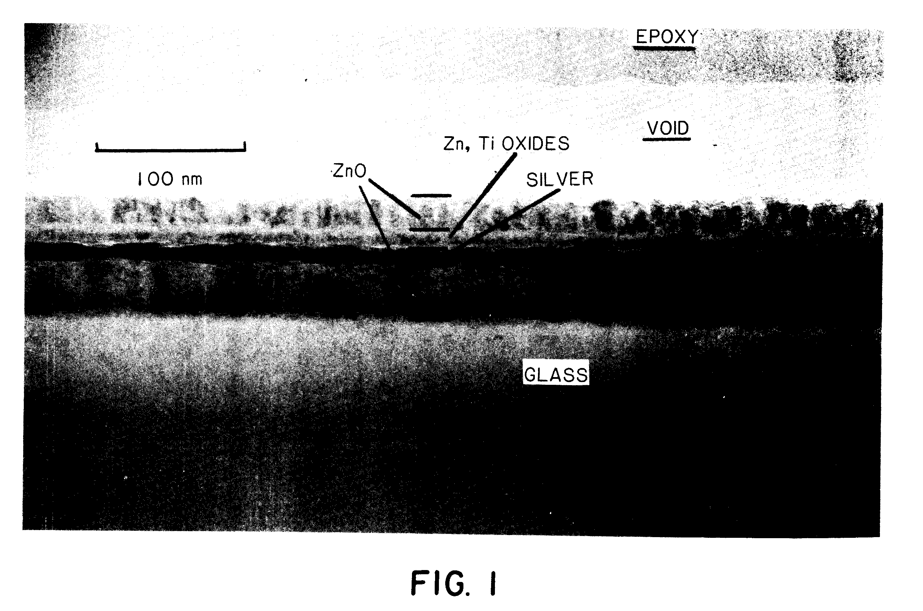

With reference to the drawings, Figure 1 is a photographic cross-sectional view of a coated glass pane of the invention produced by cross-sectional transmission electron microscopy.

Stain-susceptible metal layers such as silver or copper may be deposited by sputtering, as noted above, upon the surface of a pane of glass or other substrate. The glass surface so coated with silver or copper may initially contain one or more other layers of materials. An initial anti-reflecting layer of zinc oxide, for example, may be deposited upon a glass pane followed by the deposition of silver or copper thereon. US patent 4,563,400 (Criss, et al) discloses the use of a primer layer of stainless steel or other metal. The thickness of the copper or silver layer may be varied as needed to provide the desired reflectance and absorbance characteristics.

If oxide layers are to be later deposited over the metal layer, then it is appropriate to utilise a thin, sacrificial layer of, eg. titanium metal directly over the silver or copper layer, this metal layer becoming oxidised during subsequent steps in which a metal is sputtered in the presence of oxygen and serving to protect the silver or copper layer from becoming oxidised.

The barrier layer of the invention is positioned further from the glass pane surface than is the silver or copper metal layer so that the barrier layer serves to protect the metal layer from corrosion. Desirably, the barrier layer is positioned directly atop the sacrificial layer of, eg. titanium metal previously described.

The barrier layer consists of metal oxides comprising at least one oxide chosen from the oxides of Me-(1) and at least one oxide chosen from the oxides of Me(2). Me(1) may be titanium, zirconium or hafnium, preferably titanium. These oxides, then, are $TiO_2$, $ZrO_2$ and $HfO_2$. Zirconium oxide and hafnium oxide are less preferred because of their expense. The Me(2) oxides are oxides of zinc, tin, indium or bismuth, and take the form of $ZnO$, $SnO_2$, $In_2O_3$ and $Bi_2O_3$. Of these, zinc and tin oxides are preferred and zinc oxide, because of its relatively high deposition rate and consequent reduced expense, is most preferred. Several Me(1) oxides and several Me(2) oxides may be employed if desired. For example, the mixed oxides of zinc and tin may be employed as the Me(2) oxide.

The barrier layer, which may be thought of as a blend of Me(1) and Me(2) oxides, is substantially amorphous, although it may show some evidence of microcrystalinity. It is substantially free of grain boundaries that extend directly through the layer; to the extent that the barrier layer contains grain boundaries, they are believed to interconnect in such a tortuous pattern as to render the migration of a corrosion agent therethrough extremely difficult. The barrier layer also appears to be homogeneous; electron microscopy fails to show separate phases of Me(1) and Me(2) oxides.

The preferred method of producing the barrier layer employs a sputtering technique such as described in US patent 4,166,018 (Chapin), the teachings which are incorporated herein by reference. The technique, sometimes referred to as a magnetron sputtering technique, involves the formation of a plasma which is contained by a magnetic field and which serves to eject metal atoms from an adjacent metal target, the metal atoms being deposited upon an adjacent surface such as the surface of a glass pane. When sputtering is done in an atmosphere of an inert gas such as argon, the metal alone is deposited whereas if sputtering is done in the presence of oxygen, eg. in an atmosphere of argon and oxygen, then the metal is deposited as an oxide. Magnetron sputtering techniques and apparatuses are well known and need not be described further.

In the preferred method of the invention, the barrier layer is provided with a protective overlayer which is believed to contribute barrier characteristics while physically protecting the layers beneath it. The barrier and separate overlayer may be provided by depositing upon a suitable substrate, and in sequence, an Me-(2) metal in an oxygen-containing atmosphere, an Me(1) metal in an oxygen-containing atmosphere, and an Me(2) metal in an oxygen-containing atmosphere. The barrier that results consists of the barrier layer, which may be considered a blend of me(1) and Me(2) oxides, with a contiguous but separately identifiable overlayer of the last-mentioned Me(2) oxide.

Particularly preferred is a barrier layer in which Me(1) is titanium and Me(2) is zinc. A particularly corrosion resistant system results from the deposition upon a glass pane, by sputtering in a magnetic field as described above, of a first anti-reflecting layer of zinc oxide to a thickness of about 40 nm (400 A), a silver metal layer at a thickness of about 10 nm (100 A), a very thin layer of titanium metal sputtered in an argon atmosphere, followed by successive coatings via sputtering, of zinc, titanium and zinc, in oxygen-containing atmospheres such as mixtures of argon and oxygen, the resulting coating having a protective zinc oxide outer layer. When viewed by cross-sectional transmission electron microscopy ("XTEM"), the outer zinc oxide coating appears columnar with evident grain boundaries, whereas the barrier layer immediately underneath, comprising Me(1) and Me(2) oxides, lacks observable grain boundaries.

In practice, it is desired that the Me(1) and Me(2) oxides be applied separately by sputtering from targets of Me(1) and Me(2) metals in an oxygen-containing atmosphere. The resulting barrier layer may, however, result from the simultaneous sputtering upon a substrate of two or more different metal targets, or may result from the sputtering from a target made of an alloy of two or more metals, as desired. The latter route may be particularly advantageous when the Me(2) metals zinc and tin are to be employed, the ratios of zinc and tin ranging from substantially 100% tin to substantially 100% zinc.

In the specific example referred to above, the outer zinc oxide coating layer was of a thickness of about 30 nm (300 A), when viewed in cross-sectional transmission electron microscopy, and the barrier layer comprising the blend of oxides appeared to be approximately 13 nm (130 A) in thickness. The very thin titanium metal (converted to oxide) layer that was coated upon the silver metal layer was not observed and may well have been incorporated in the blend of Me(1) and Me(2) oxides.

The blend of Me(1) and Me(2) oxides may, of course, contain certain stoichiometric ratios of Me(1)-Me-(2)-$O_X$ materials such as $Zn_2TiO_4$, $ZnTiO_3$, etc. When Me(1) is titanium and Me(2) is zinc, then the mixture of oxides may be a blend of $Zn_2TiO_4$ and ZNO. Reference is made to F.H. Dulin and D.E. Rase, J. Am. Ceram. Soc., 43[3] 130 (1960), particularly Figure 303 which shows the phase diagram of $ZnO$-$TiO_2$, the teachings of which are incorporated herein by reference.

In practice, glass panes desirably are carefully cleaned and are then provided with a direct coating of an Me(2) metal, desirably zinc oxide, followed by a coating of a metal such as silver or copper. As noted above, a very thin, sacrificial metal layer (preferably titanium) is then applied, followed directly by the barrier layer which is sputtered onto the surface of the metal sacrificial layer. The barrier layer desirably is produced by sputtering, in sequence, zinc in an oxygen-containing atmosphere and titanium in an oxygen-containing atmosphere. Finally, zinc may be sputter coated in an oxygen-containing atmosphere to form a contiguous, separate protective overlayer. The thicknesses of the various layers that are thus deposited are selected as desired to produce an appropriate barrier layer and to provide the appropriate colour, degree of light transmission, etc.

The relative amounts of Me(1) and Me(2) oxides employed in the barrier layer are chosen to render the barrier layer substantially amorphous and free from grain boundaries (when viewed via cross-section transmission electron microscopy at about 300,000 X). Some Me(1) and Me(2) oxide materials may be supplied by earlier or subsequently applied layers of such oxides. In the specific example referred to above, some of the $TiO_2$ component of the barrier layer likely was supplied by the sacrificial titanium metal layer that was subsequently oxidized. Similarly, some of the ZnO component of the barrier layer may have been supplied by the subsequently applied ZnO protective layer. In any event, sufficient Me(1) oxide and Me(2) oxide are present in the barrier layer (which is a separately identifiable layer) so that the layer is generally homogeneous, amorphous and devoid of grain boundaries as explained above, and further is of sufficient thickness, as to render the layer substantially non-transmissive of moisture and staining agents as determined by the exposure of coated glass panes to U.V. light and moisture at elevated temperatures as described below.

Although it is difficult to measure precisely the amounts of Me(1) and Me(2) oxides in a barrier layer, these quantities can be closely approximated from experience in depositing individual layers of Me(1) and Me(2) oxides upon substrates. The thickness of an oxide layer depends upon the quantity of oxide deposited per unit area and the density of the deposited layer; the quantity of oxide deposited is a function of the metal selected, rate of power consumption and rate of travel of a glass pane beneath the metal sputtering target. The experiential relationship of these parameters to measured oxide layer thickness enables one to predict with reasonable accuracy the thickness of a sputtered layer from knowledge of the above parameters. As used herein, "apparent" thickness means the thickness of an oxide film that would be obtained if the film were separately sputtered upon a substrate.

The relative quantities of Me(1) and Me(2) oxides employed in the barrier layer thus can be expressed in terms of the "apparent" thickness resulting from each oxide if it was applied as a separate layer upon a substrate. Barrier layers of the invention desirably are characterised by having a ratio of the apparent thickness of Me(1) oxide to the total apparent thickness of the barrier layer of at least about 1/3 and preferably at least about 0.39. Also, the apparent total barrier layer thickness desirably is not less than about 7 nm (70 A) and preferably is about 11.5 nm (115 A) or greater.

The following illustrative example will serve to explain the invention in greater detail.

Example 1

Glass panes, suitably cleaned, were subjected to magnetron sputtering procedures from a series of target cathodes. The amount of each material that was thus sputter-coated was controlled by varying the number of cathodes beneath which the glass panes were passed during the coating operation. The apparent thicknesses of the materials that were thus deposited are summarised in Table 1 below.

The surface of each glass pane was first coated with zinc oxide (utilising a zinc cathode in an oxygen atmosphere) to an apparent thickness of 37.5 nm (375 A) to provide an antireflective layer. Subsequent measurement utilising cross-section transmission electron microscopy ("XTEM") showed this layer to be approximately 45 nm (450 A) in thickness. Over the thus described zinc oxide layer was deposited silver metal to an apparent thickness of 15 nm (150 A) as measured by XTEM at 15.5 nm (155 A), followed by a sacrificial layer of titanium metal. The latter layer was oxidised by the subsequent sputtering process, and the titanium oxide layer that resulted from the sacrificial layer had an apparent thickness of 2 nm (20 A).

The sacrificial titanium metal coating was then sequentially overcoated with a zinc oxide layer and a titanium dioxide layer at apparent thicknesses of 10 nm (100 Angstroms) and 4.5 nm (45 Angstroms), respectively, to produce a barrier layer. The actual thickness of the barrier layer, measured by XTEM, was approximately 16 nm (160 A), whereas the apparent thickness of the barrier layer 2 nm plus 10 nm plus 4.5 nm was 16.5 nm (165 A). A final layer of zinc oxide was applied at an apparent thickness of 25 nm (250 Angstroms) as XTEM measured at 30 nm (300 Angstroms). The resulting coated glass pane was exposed to the weathering test device described below, and no evidence of corrosion occurred in 24 hours.

The outer surface of the pane was coated with an epoxy resin, and the coating was subjected to cross-sectional transmissional electron beam microscopy by known techniques to yield the photograph appearing in Figure 1. Transmission electron defraction studies identified the layers as labelled on the photograph. The anti-reflection zinc oxide film initially deposited upon the glass surface appears as a well defined layer, as does the darker layer of metallic silver upon the initial zinc oxide layer. A well defined barrier layer appears upon the silver layer, the barrier layer consisting of oxides of zinc and titanium. Note should be made of the absence of the sacrificial titanium metal (oxidised to the oxide) layer that was applied immediately above the silver layer; it appears that this layer has combined with the subsequently applied zinc and titanium oxide layers to form the generally homogeneous barrier layer. Upon the barrier layer is shown a separately detectable zinc oxide layer as an outer protective layer. The crystalline, columnar structure of the outer zinc oxide layer is clearly shown in the photograph, as are grain boundaries extending through the layer. The barrier layer, in contrast, does not exhibit any grain boundaries, nor does it exhibit a crystalline structure but rather appears to be amorphous. As mentioned earlier, the oxides present in the barrier layer may be a blend of separate Me(1) and Me(2) oxides or may involve more complex oxides such as $Zn_2TiO_4$ containing ZnO and $ZnTiO_3$ containing $TiO_2$, etc.

Spaced above the outer zinc oxide layer is an epoxy resin layer, applied during preparation of the sample for electron microscopy.

The thus-described specimen is identified as "A" in Table 1. Specimens "B", "C", "D" and "E" also were obtained by varying the apparent thickness of the zinc oxide and titanium dioxide layers that were applied directly beneath the outer zinc oxide protective layer. Example B differed from Example A in that apparent thicknesses of the zinc oxide layer applied atop the titanium metal sacrificial layer was reduced by one-half; good corrosion resistance yet was demonstrated by the resulting barrier layer, which had an apparent thickness of approximately 11.5 nm (115 A). In specimen D, the apparent thickness of the titanium dioxide layer was reduced to 2.5 nm (25 A), whereas the apparent thickness of the zinc oxide layer remained at 10 nm (100 A). Although the apparent thickness of the barrier layer was 14.5 nm (145 A), the ratio of the apparent thickness of the titanium dioxide layer to that of the total barrier layer was 0.31. Poor corrosion resistance was measured.

In specimen D, the titanium dioxide layer was further reduced in thickness to 1.5 nm (15 A), but the zinc oxide layer was increased in thickness to 23 nm (230 A), yielding an apparent total thickness of the barrier layer of 26.5 nm (265 Angstroms) but a ratio of titanium dioxide apparent thickness to total apparent thickness of the barrier layer of only 0.13. Again, poor corrosion resistance was measured. Specimen E shows the results of maintaining the apparent thickness of the titanium dioxide layer at 4.5 nm (45 A) but omitting the zinc oxide layer. The thickness of the barrier layer was thus reduced to 6.5 nm (65 Angstroms); poor corrosion resistance was noted.

A comparison, in terms of rate of throughput of glass panes ad power consumption, was made between the process yielding specimen A as shown in Table 1 and another process which eliminated layers 4, 5, and 6 at an apparent thickness of 12.0 nm (120 Angstroms), in accordance with the prior art process described above. The thick titanium dioxide layer was applied using multiple titanium metal cathodes. The same sputtering apparatus was employed for each run. Whereas the throughput rate of the prior art process was approximately 4572 mm (180 inches) per minute, the throughput rate of the glass panes of specimen A, which utilised less electric power, was approximately 6604 mm (260 inches) per minute, and thus resulted in an increase in throughput rate of about 44%. The ability to thus increase the production rate, and eliminate the use of paper spacers between panes, is of substantial commercial importance.

It will be understood that glass panes so coated commonly are employed in an insulating glass unit in which the panes are spaced from one another to define an interpane space which is commonly filled with a dry gas such as argon, the coated surfaces of the panes facing one another and hence no longer being exposed to airborne corrosive agents such as $SO_2$, water vapour and the like.

An appropriate test for determining the barrier properties of the barrier layer involves placing coated panes within a weathering test device in which the panes are exposed to ultraviolet light in a high moisture environment at a temperature of, eg. 190°F (about 88°C). The onset of corrosion or staining commonly is observed by the development of small, coloured spots in the coating layer which can be visually observed without magnification. Glass panes coated in accordance with the invention commonly are capable of withstanding 24 hours in the test device without noticeable change.

**TABLE 1**

| No. | Layer | A (nm) | B (nm) | C (nm) | D (nm) | E (nm) |
|---|---|---|---|---|---|---|
| (6) | ZnO(Me(2)Oxide), Apparent Thickness: | 25.0 (1) | 25.0 | 25.0 | 25.0 | 25.0 |
| (5) | TiO2(Me(1) | 4.5 | 4.5 | 1.5 | 2.5 | 4.5 |
| (4) | ZnO Apparent Thickness: | 10.0 (2) | 5.0 | 23.0 | 10.0 | 0 |
| (3) | Ti(O$_2$) Apparent Thickness: | 2.0 | 2.0 | 2.0 | 2.0 | 2.0 |
| (2) | Silver Metal, Apparent Thickness: | 15.0 (3) | 15.0 | 15.0 | 15.0 | 15.0 |
| (1) | ZnO, Apparent Thickness: | 37.5 (4) | 37.5 | 37.5 | 37.5 | 37.5 |
| | Results: | Good corrosion resistance | Good corrosion resistance | Poor corrosion resistance | Poor corrosion resistance | Poor corrosion resistance |

(1) Measured, XTEM, at approximately 30 nm (300 A)
(2) Barrier layer, comprising layers (3), (4) and (5) measured, XTEM, at approximately 16.0 nm (160 A)
(3) Measured, XTEM, at approximately 15.5 nm (155 A)
(4) Measured, XTEM, at approximately 45.0 nm (450 A)

**Claims**

1. A glass pane having a transparent coating thereon comprising a metal layer susceptible to staining in the presence of a staining agent, and a separate barrier layer spaced further from the surface of the glass pane than the metal layer, the barrier layer comprising a plurality of metal oxide layers including a layer of an oxide of a metal Me(1) disposed between layers of an oxide of a metal Me(2), wherein Me(1) is titanium, zirconium or hafnium or mixtures thereof and Me(2) is zinc, tin, indium or bismuth or mixtures thereof.

2. A glass pane according to Claim 1 in which Me(2) is zinc or a blend of zinc and tin and Me(1) is titanium.

3. A glass pane according to Claim 1 or Claim 2 in which the metal layer susceptible to staining is silver.

4. A glass pane according to any preceding claim including an outermost, separate layer of zinc oxide.

5. A glass pane according to any preceding claim in which the barrier layer further comprises a layer of an Me(1) oxide formed from a sacrificial layer of a metal Me(1) and disposed between the metal layer and the first Me(2) oxide layer.

6. A glass pane according to any preceding claim further comprising a layer of a metal Me(2) oxide between the glass surface and the metal layer.

7. A method for protecting a stain-susceptible metal layer carried as one of a plurality of transparent layers upon a glass pane surface, comprising depositing metal oxides of the metals Me(1) and Me(2) via sputtering in an oxygen-containing atmosphere from separate Me(1) and Me(2) targets to form a substantially amorphous barrier layer substantially free of grain boundaries, wherein the barrier layer comprises a layer of an oxide of a metal Me(1) disposed between layers of an oxide of a metal Me(2) and wherein Me(1) is titanium, zirconium or hafnium or mixtures thereof and Me(2) is zinc, tin, indium or bismuth or mixtures thereof, the barrier layer being non-transmissive of moisture or staining agents, and being positioned further from the glass surface than the stain-susceptible metal layer.

8. A method according to Claim 7 in which the barrier layer further comprises a layer of an Me(1) oxide formed from a sacrificial layer of a metal Me(1) and deposited between the metal layer and the first Me(2) oxide layer.

9. A method according to Claim 8, including the sequential steps of cleaning the glass pane surface, and sputter coating the glass pane surface sequentially with zinc oxide, silver metal, titanium metal, zinc oxide and titanium dioxide.

10. A method according to any one of Claims 7 to 9 including the subsequent step of sputter coating the coated glass with zinc oxide to form a separate, outermost, protective layer.

**Patentansprüche**

1. Glasscheibe mit einem transparentem Überzug, der eine in Anwesenheit eines ein Anlaufen verursachenden Agens anlaufempfindliche Metallschicht und eine gesonderte Sperrschicht aufweist, die weiter von der Glasscheibenoberfläche entfernt ist als die Metallschicht, wobei die Sperrschicht eine Mehrzahl von Metalloxidschichten einschließlich einer Schicht aus einem Oxid eines Metalls Me(1) aufweist, die zwischen Schichten eines Oxids eines Metalls Me(2) gelegen ist, wobei Me(1) Titan, Zirkonium oder Hafnium oder ein Gemisch hiervon ist und Me(2) Zink, Zinn, Indium oder Wismuth oder ein Gemisch hiervon ist.

2. Glasscheibe nach Anspruch 1, wobei Me(2) Zink oder ein Gemisch aus Zink und Zinn ist, und Me(1) Titan ist.

3. Glasscheibe nach Anspruch 1 oder 2, wobei die anlaufempfindliche Metallschicht Silber ist.

EP 0 304 234 B1

**4.** Glasscheibe nach einem der vorhergehenden Ansprüche mit einer gesonderten äußersten Schicht aus Zinkoxid.

**5.** Glasscheibe nach einem der vorhergehenden Ansprüche, wobei die Sperrschicht außerdem eine Schicht aus einem Me(1)-Oxid enthält, das aus einer Opferschicht aus dem Metall Me(1) gebildet ist und zwischen der Metallschicht und der ersten Me(2)-Oxidschicht liegt.

**6.** Glasscheibe nach einem der vorhergehenden Ansprüche, die weiter eine Schicht aus einem Me(2)-Oxid zwischen der Glasoberfläche und der Metallschicht aufweist.

**7.** Verfahren zum Schutz einer anlaufempfindlichen Metallschicht, die als eine von mehreren transparenten Schichten auf einer Glasscheibenoberfläche aufgebracht ist, welches das Aufbringen von Metalloxiden der Metalle Me(1) und Me(2) durch Zerstäuben in einer Sauerstoff enthaltenden Atmosphäre aus getrennten Me(1)- und Me(2)-Targets zur Bildung einer im wesentlichen amorphen, von Korngrenzen im wesentlichen freien Sperrschicht umfaßt, wobei die Sperrschicht eine Schicht eines Oxids eines Metalls Me(1) aufweist, die zwischen Schichten eines Oxids eines Metalls Me(2) gelegen ist, und wobei Me(1) Titan, Zirkonium oder Hafnium oder ein Gemisch hiervon ist und Me(2) Zink, Zinn, Indium oder Wismuth oder ein Gemisch hiervon ist, und wobei die Sperrschicht für Feuchtigkeit oder ein Anlaufen verursachende Agenzien undurchlässig und weiter von der Glasoberfläche entfernt ist als die anlaufempfindliche Metallschicht.

**8.** Verfahren nach Anspruch 7, wobei die Sperrschicht außerdem eine Schicht aus einem Me(1)-Oxid aufweist, die aus einer Opferschicht eines Metalls Me(1) gebildet ist und zwischen der Metallschicht und der ersten Me(2)-Oxidschicht liegt.

**9.** Verfahren nach Anspruch 8, mit den aufeinanderfolgenden Schritten der Reinigung der Glasscheibenoberfläche und der Zerstäubungsbeschichtung der Glasscheibenoberfläche nacheinander mit Zinkoxid, Silbermetall, Titanmetall, Zinkoxid und Titanoxid.

**10.** Verfahren nach einem der Ansprüche 7 bis 9, mit dem nachfolgenden Schritt der Zerstäubungsbeschichtung des überzogenen Glases mit Zinkoxid zur Bildung einer gesonderten äußersten Schutzschicht.

**Revendications**

**1.** Panneau en verre comportant un revêtement transparent comprenant une couche de métal susceptible de former des taches d'oxydation ou de corrosion en présence d'un agent de corrosion, et présentant une couche séparée formant barrière, plus éloignée de la surface du panneau de verre que la couche de métal, la couche formant barrière comprenant plusieurs couches d'oxyde de métal comprenant une couche d'un oxyde d'un métal Me(1) disposée entre des couches d'un oxyde de métal Me(2), le métal Me(1) étant du titane, du zirconium ou du hafnium ou un de leurs mélanges, et Me(2) étant le zinc, l'étain, l'indium, le bismuth ou un de leurs mélanges.

**2.** Panneau de verre selon la revendication 1, dans lequel Me(2) représente le zinc ou un mélange de zinc et d'étain, et Me(1) représente le titane.

**3.** Panneau de verre selon la revendication 1 ou la revendication 2, dans lequel la couche de métal susceptible de se corroder et de présenter des taches est de l'argent.

**4.** Panneau en verre selon l'une quelconque des revendications précédentes, comprenant une couche séparée plus externe en oxyde de zinc.

**5.** Panneau de verre selon l'une quelconque des revendications précédentes, dans lequel la couche formant barrière comprend en outre une couche d'un oxyde de Me(1) formée à partir d'une couche sacrifiée d'un métal Me(1) et disposée entre la couche de métal et la première couche d'oxyde de Me-(2).

8

**6.** Panneau de verre selon l'une quelconque des revendications précédentes, comprenant en outre une couche d'un oxyde de métal Me(2) entre la surface du verre et la couche de métal.

**7.** Procédé pour protéger une couche de métal susceptible de se corroder ou de s'oxyder en formant des taches, couche portée comme constituant l'une des diverses couches transparentes sur une surface de panneau de verre ou de vitre, le procédé comprenant le dépôt d'oxydes de métaux dérivant des métaux Me(1) et Me(2), par projection par pulvérisation cathodique dans une atmosphère contenant de l'oxygène à partir de cibles séparées en Me(1) et en Me(2) pour former une couche constituant une barrière sensiblement amorphe, sensiblement dépourvue de limites des grains, la couche formant barrière comprenant une couche d'un oxyde d'un métal Me(1) disposée entre des couches d'un oxyde de métal Me(2) et le métal Me(1) étant du titane, du zirconium ou de l'hafnium ou un de leurs mélanges, et Me(2) étant du zinc, de l'étain, de l'indium ou du bismuth ou un de leurs mélanges, la couche formant barrière ne transmettant pas l'humidité ou les agents de corrosion, et cette couche étant placée, par rapport à la surface du verre, plus loin que la couche de métal susceptible de se corroder et de former des taches.

**8.** Procédé selon la revendication 7, dans lequel la couche formant barrière comprend en outre une couche d'un oxyde de Me(1) formée à partir d'une couche sacrifiée d'un métal Me(1) et déposée entre la couche de métal et la première couche d'oxyde de Me(2).

**9.** Procédé selon la revendication 8, comprenant les étapes successives de nettoyage de la surface du panneau de verre et le revêtement, par pulvérisation cathodique, de la surface du panneau en verre successivement par de l'oxyde de zinc, de l'argent métallique, du titane métallique, de l'oxyde de zinc et du dioxyde de titane.

**10.** Procédé selon l'une quelconque des revendications 7 à 9, comprenant l'étape subséquente consistant à soumettre le verre revêtu d'oxyde de zinc à un revêtement, par pulvérisation cathodique, en vue de former une couche protectrice séparée la plus externe.

FIG. I